# EUROPÄISCHE PATENTSCHRIFT

(11) **EP 1 926 400 B1**
(45) Veröffentlichungstag und Bekanntmachung des Hinweises auf die Patenterteilung: **16.12.2009**
(21) Anmeldenummer: 06805813.0
(22) Anmeldetag: 22.09.2006
(51) Int. Cl.: A23L 3/3418, F25D 17/04

(54) **VERFAHREN UND VORRICHTUNG ZUR HERSTELLUNG EINER KONDITIONIERTEN ATMOSPHÄRE**
METHOD AND APPARATUS FOR CREATING AN AIR-CONDITIONED ATMOSPHERE
PROCEDE ET DISPOSITIF POUR CREER UNE ATMOSPHERE CONDITIONNEE

(30) Priorität: 23.09.2005 DE 102005045760
(43) Veröffentlichungstag der Anmeldung: 04.06.2008
(73) Patentinhaber: HOFFMANN CONSORTEN HAMBURG GMBH, 22397 Hamburg (DE)
(72) Erfinder: SAUL, Heinrich, 22397 Hamburg (DE)
(74) Vertreter: Kossak, Sabine
(86) Internationale Anmeldenummer: PCT/EP2006/009246
(87) Internationale Veröffentlichungsnummer: WO 2007/033835

(56) Entgegenhaltungen:
- EP-A2- 0 224 469
- EP-A2- 0 888 804
- WO-A-2004/043573
- WO-A2-03/086874
- DE-A1- 10 143 527

## Beschreibung

Gegenstand der Erfindung ist eine Vorrichtung zur Herstellung einer konditionierten Atmosphäre in einem Lager- oder Transportbehälter mit einem Kompressor zur Erzeugung von Druckluft, einer Kühleinrichtung zur Abkühlung der Druckluft, einer dem Kompressor und der Kühleinrichtung nachgeschalteten Gastrennmembran zur Erzeugung eines stickstoffreichen Gasstroms. Weiterhin ist Gegenstand der Erfindung ein Verfahren zur Herstellung einer, konditionierten Atmosphäre in einem Lager öder Transportbehälter, bei dem mittels eines Kompressors Druckluft erzeugt, die Druckluft anschließend mit einer Kühleinrichtung gekühlt und aus der Druckluft ein stickstoffreicher Gasstrom zur Leitung in den Transportbehälter mittels einer Gastrennmembran erzeugt wird.

Verderbliche Güter sind unter ihren üblichen Umgebungsbedingungen nur begrenzt halt bar. Abhängig von der Warenart betragen die Lager- und damit die Transponzeiten teil- , weise nur wenige Tage. Die Qualitätserhaltung während einer längeren Lager- oder Transportzeit kann durch eine veränderte Umgebungsatmosphäre verbessert werden. Bekannt ist hier, dass eine saueratoffreduzierte Atmosphäre in dem Lager- oder'Transportbehälter qualitätserhaltende Auswirkungen hat.

Besondere Bedeutung hat der Einsatz einer konditionierten Atmosphäre (Controlled Atmosphere (CA)) bei der Lagerung und dem Transport von Obst und Gemüse (Perishables). Die natürlichen Lagerzeiten von Gutem wie Obst, Gemüse, Früchten und Blumen sind sehr kurz, teilweise nur wenige Tage. Angesichts der weltumspannenden Transporte von diesen Gütern gibt es seitens der Transportlogistik ein erhebliches Interesse an Verfahrern und Einrichtungen, um Langzeitlagerungen und transporte zu realisieren.

Grundvoraussetzung für Lagerung und Transport von Obst und Gemüse ist Kühlung. Durch zusätzliche extreme Reduzierung des Sauerstoffgehaltes in der Atmosphäre des Transport- oder Lagerbehälters verfällt das Transportgut in eine Art "künstliches Koma". Die Lebensprozesse der Früchte reduzieren sich auf ein Minimum, der Energieumsatz sinkt. Unter solchen Bedingungen sind selbst voll ausgereifte Früchte wochenlang lager-oder transportfähig.

In den letzten Jahren wurden entsprechende Lager- oder Transportbehälter mit Kühlungssystemen, in denen eine konditionierte Atmosphäre herrscht, auf der Basis der Membrantechnik erbaut und betrieben. Um Stickstoff zu produzieren, wird aus der Umgebungsluft (ca. 78°% Stickstoff und 21% Sauerstoff, sonstige Komponenten) Druckluft erzeugt und über eine Gastrennmembran geführt, die je nach eingestelltem Druck am Ausgang der Membran, einen Stickstoffstrom mit 1 - 5% Restsauerstoff erzeugt. Der Stickstoffstrom hat je nach Reinheit einen Anteil von 20 - 30% der eingesetzten Druckluft. Die Membran trennt neben anderen in der Druckluft enthaltenen Gasen (z.B. Edelgase) auch den in der Druckluft vorhandenen Wasserdampf ab.

Eine entsprechende Vorrichtung zur Erzeugung einer stickstoffhaltigen Atmosphäre in einem Transportbehälter ist aus der EP 0 357 949 B1 bekannt, bei der Stickstoff mittels eines Stickstoffgenerators, bestehend aus einem Luftkompressor und einer Gastrennmembran, aus der Umgebung gewonnen wird. Diese Vorrichtung ist als lösbare, im Bedartsfall zu montierende, Einheit für Transportbehälter beschrieben, die gegebenenfalls auch ein Kühlaggregat enthalten kann. Nachteil der beschriebenen Anlage ist, dass eine kontrollerte Einstellung der Feuchtigkeit in der Behätteratmosphäre nicht möglich ist. Ebenso ist keine Beeinflussung der Stickstoffqualität hinsichtlich des Gehaltes an Restsauerstoff während des Betriebes möglich.

Die transportierten Früchte geben während des Transports Feuchtigkeit ab. Diese Feuchtigkeitsabgabe wird bei sinkender Luftfeuchtigkeit in der Behälteratmosphäre stärker und führt zu einem messbaren Gewichtsverlust. Dieser Gewichtsverlust stellt nicht nur eine Minderung der verkaufsfähigen Masse und damit eine Erlöseinbuße dar, sondern die Frucht verliert darüber hinaus ihr frisches Aussehen, was ebenfalls zu einer Beeinträchtigung der Vermarktung führt. Der übliche Gewichtsverlust der Früchte beträgt beispielswelse bei Containertransporten von Brasilien nach Europa bei einem Transport in konditionierter Atmosphäre 2 bis 3 Gew.% des Ursprungsgewichtes.

Die DE 101 43 527 C2 schlägt daher eine Vorrichtung vor, mit der Stickstoff mittels eines Luftkompressors und einer Gastrennmembran aus der Umgebungsluft gewonnen wird. Die Vorrichtung enthält gleichzeitig eine Feuchtigkeitsreglungseinrichtung, um den Feuchtigkeitsgehalt der Behälteratmosphäre erhöhen zu können. Nachteil dieser Feuchtigkeitsregelungseinrichtung ist, dass eine angepasste Feuchtigkeitszuführung nicht möglich ist, sondern die beschriebene Befeuchtung im AUF/ ZU-Verfahren arbeitet. Weiterhin erlaubt auch diese Anlage keine gezielte Steuerung des Restsauerstoffgehatts in der stickstoffreichen Druckluft.

Aus der WO 03/086874 A2 ist ein Transportbehälter bekannt, bei dem die Behälteratmosphäre mittels einer Befeuchtungseinrichtung befeuchtet wird. Hierbei wird die bei der Entfeuchtung der Druckluft zur Stickstofferzeugung gewonnene Feuchtigkeit einem Stickstoffteilstrom zugeführt. Die Feuchtigkeitsübertragung ist durch die Aufnahmefähigkeit des Stickstoffstroms begrenzt. Eine gezielte Einstellung der Feuchtigkeit des Stickstoffteilstromes ist nicht möglich, im Bedarfsfall wird der Stickstoffteilstrom nicht über die Befeuchtungsmembrane geführt, sodass keinerlei Befeuchtung stattfindet Durch die Kopplung der beiden Stickstoffströme kann das System nicht gezielt auf veränderte Bedingungen im Behälter reagieren.

Aufgabe der vorliegenden Erfindung ist es, ein Verfahren, und eine Vorrichtung bereit zustellen, die die aus dem Stand der Technik bekannten Nachteile überwindet und das insbesondere geeignet ist, aus der Umgebungsluft bei unterschiedlichsten Umgebungstemperaturen eine konditionierte Atmosphäre mit einem erhöhten Stickstoffgehalt bei definiertem Feuchtigkeitsgehalt in einem Lager- oder Transportbehälter zu erzeugen und aufrecht zu erhalten. Das erforderliche Wasser für die Befeuchtung der Behälteratmosphäre soll dabei ausschließlich aus der Behälteratmosphäre sowie aus der umgebenden Atmosphäre gewonnen werden, so dass die Vorrichtung keinen separaten Wasservorrat zur Befeuchtung benötigt.

Die Aufgabe wird erfindungsgemäß gelöst durch eine Vorrichtung zur Herstellung einer konditionierten Atmosphäre in einem Lager- oder Transportbehälter mit einem Kompressor zur Erzeugung von Druckluft, einer Kühleinrichtung zur Abkühlung der Druckluft, einer dem Kompressor und der Kühleinrichtung nachgeschalteten Gastrennmembran zur Erzeugung eines stickstoffreichen Gasstroms, wobei der aus der Gastrennmembran austretende Gasstrom dem Lager- oder Transportbehälter zugeleitet wird, um im Behälter eine stickstoffreiche, konditionierte Atmosphäre zu erhalten, wobei die Vorrichtung eine Befeuchtungsmembran aufweist, die hinter der Gastrennmembran angeordnet ist, und der aus der Gastrennmembran austretende Stickstoffstrom durch die Befeuchtungsmembran geleitet und in der Befeuchtungsmembran mit Feuchtigkeit beladen wird, mit den Merkmalen den Vorrichtung des Anspruchs 1.

Die Aufgabe wird weiterhin gelöst durch ein Verfahren zur Herstellung einer konditionierten Atmosphäre in einem Lager- oder Transportbehälter, bei dem mittels eines Kompressors Druckluft erzeugt, wahlweise aus der Umgebungsluft oder der Behäfteratmosphäre, die Druckluft anschließend mit einer Kühleinrichtung gekühlt und vorzugsweise aus der Druckluft eine stickstoffreicher Gasstrom zur Leitung in den Lager- oder Transportbehälter mittels einer Gastrennmembran erzeugt wird, wobei der Stickstoffstrom besonders bevor zugt vor der Einleitung in den Lager- oder Transportbehälter befeuchtet wird, dadurch gekennzeichnet, dass die überströmende Behälteratmosphäre im Kreislauf geführt wird und nach ihrem Austritt aus dem Transportbehälter wieder dem Druckluftkompressor zugeführt wird, wobei der Gastrennmembran (10) ein Stickstoffregelventil (11) nachgeschaltet ist und dieses Stickstoffrigelventil ein Kaskadenventil ist

Weitere Ausführungsformen sind Gegenstand der Unteransprüche oder nachfolgend beschrieben.

In der erfindungsgemäßen Vorrichtung wird von einem Luftkompressor, dem eine Gastrennmembran nachgeschaltet ist, ein Stickstoffstrom erzeugt. Der Stickstoffstrom wird über eine der Gastrennmembran nachgeschaltete Befeuchtungsmembran in einen Lager-oder Transportbehälter überführt. Die Befeuchtungsmembran kann dabei von mit Feuchtigkeit beaufschlagter Druckluft durchströmt werden, um die enthaltene Feuchtigkeit in den Stickstoffstrom zu transferieren, oder alternativ nicht von Druckluft durchströmt werden, so dass keinerlei Feuchtigkeit angeboten wird, die in den Stickstoffstrom transferiert werden könnte. Hierdurch ist gezielt ein definierter Feuchtigkeitsgehalt der Behälteratmosphäre einstellbar.

Unter Stickstoffstrom in Sinne der Erfindung wird der stickstoffreiche Druckluftstrom, der aus der Gastrennmembran austritt, verstanden. Als Druckluft wird die im Kompressor komprimierte Luft bezeichnet, unabhängig davon, ob es sich hierbei um komprimierte Umgebungsluft, komprimierte Behälteratmosphäre oder eine Mischung davon handelt. Die im Behälter befindliche Gasmischung wird als Behälteratmosphäre und das aus dem Behälter austretende Gas als verdrängte Behälteratmosphäre benannt. Unter Feuchtigkeit wird der Wassergehalt der jeweiligen Gasmischung, also der Anteil an Wasserdampf, verstanden.

Bei der Erzeugung von Druckluft fällt im Kompressor Wärme an. Diese Wärme wird vom Kompressoröf aufgenommen, über einen Ölkühler geführt und dort gekühlt. Die Kühlung im Ölkühler erfolgt üblicherweise durch einen von einem Gebläse erzeugten Luftstrom. In einer vorteilhaften Ausführungsform wird das Kompressoröl statt über einen Ölkühler über einen Wärmetauscher geführt, der im Gegenstrom vom Kühlmittel der vorhandenen Kühlanlage durchströmt wird. Da die Baugröße eines solches Wärmetauschers außerordentlich gering ist, lässt er sich vorteilhaft ins Gesamtsystem integrieren. Eine Zusatzeinrichtung, wie ein Gebläse zur Erzeugung der Kühlung, wird bei Einsatz des Wärmetauschers nicht benötigt. In einer weiteren Ausführungsform wird an Stelle des üblichen Öl-Luft-Kühlers ein Öl-Kühlmittel-Wärmetauscher als Ölkühler eingesetzt. Dieser Öl-Kühlmittel-Kühler hat ebenfalls den Vorteil, dass er sehr klein ist und so leicht in die Vorrichtung integriert werden kann. Hierdurch können mechanische Beschädigungen öder korrosive Angriffe der Seeluft minimiert werden. Der Öl-Kühlmittel-Kühler ist vorzugsweise als Plattenwärmetauscher ausgestattet, wobei die Eingangsseite des Plattenwärmetauschers direkt mit den Ölausgangs- und Öleinganganschlüssen des Kompressors verbunden ist. Die Platten des Plattenwämnetauschers bilden mit den engen Zwischenräumen für Öl und Kühlmittel in ihrer Summe eine große Oberfläche für den Wärmeübergang vom Kompressoröl zum Kühlmittel. Der Wärmeübergang erfolgt über die metallischen Flächen direkt von Flüssigkeit zu Flüssigkeit.

Vorzugsweise wird die Druckluft vor der Zuleitung zur Gasmembran in einer Kühleinrichtung abgekühlt. Die Absenkung der Drucklufttemperatur erfolgt erfindungsgemäß über den Wärmeaustausch mit dem Kühlluftstrom der Kühleinrichtung. Diese Anordnung ist außerordentlich effektiv, da die Innentemperatur des Lager- oder Transportbehälters im Regelfall unter der Umgebungstemperatur liegt und daher die Temperatur der gekühlten Druckluft auf einen Wert unterhalb der Umgebungstemperatur herabgekühlt werden kann. Die erfindungsgemäße Kühleinrichtung benötigt keinerlei Zusatzeinrichtungen zur Erzeugung einer weiteren Kühlung.

Bei Nutzung der Ausführungsform mit einem Wärmetauscher erfolgt die Absenkung der Drucklufttemperatur in zwei Stufen: In der ersten Stufe wird die ungekühlte, aus dem Vierdichter austretende Druckluft mittels eines Doppetrohr-Wärmetauschers durch gekühlte Druckluft vor deren Eintritt in die Gasmembran abgekühlt. Hierbei erwärmt sich die in die Gastrennmembran eintretende Druckluft und nimmt eine relative Luftfeuchte von etwa 80-85% an. In der zweiten Stufe wird die Druckluft mittels eines Kühlrohrs über den Wärmeaustausch mit dem Kühlluftstrom der Kühleinrichtung gekühlt. Auch der Einsatz eines Wärmetauschers erlaubt die effektive Kühlung ohne Einsatz von Zusatzeinrichtungen.

Die erfindungsgemäße Vorrichtung ermöglicht eine vereinfachte Anordnung und eine Reduktion der Anzahl der zum Betrieb notwendigen Komponenten. Diese Reduktion wirkt sich positiv auf die Stabilität der Anlage und damit auf die Sicherheit des Transportes aus.

Die erfindungsgemäße Vorrichtung ist vorzugsweise eine separate Einheit, die in unmittelbarer Nähe zur Kühlanlage eines Lager- oder Transportbehälters montiert wird. Die erfindungsgemäße Vorrichtung kann sowohl für stationäre Anlagen, wie Kühlhäuser, als auch für Kühlschiffe Reefer-Container, Kühl-LKW's oder Schienenfahrzeuge eingesetzt werden. Für Reefer-Container ist es vorteilhaft die Komponenten der Anlage in die Freiräume der Kühlanlage zu integrieren, um eine kompakte -die im Seeverkehr bestehenden räumlichen Vorgaben berücksichtigende - Einheit zu bilden.

Das erfindungsgemäße Verfahren durchläuft verschiedenen betriebsphasen. Diese können nacheinander geschaltet ablaufen. Es ist jedoch auch möglich, das Verfahen nur in einer Betriebsphase zu betreiben.

Zu Beginn des erfindungsgemäßen Verfahrens (Anlaufphase Typ 1) kann die Behälteratmosphäre im Lager- oder Transportbehälter durch Kühlung in ihrer Temperatur abgesenkt werden. Däbei steigt die relative Luftfeuchtigkeit, so dass zu diesem Zeitpunkt keinerlei Befeuchtung des Stickstoffstroms erforderlich ist, um den Feuchtigkeitsgehalt der Behälteratmosphäre; aufrecht zu erhalten. Über eine Ansaugeinrichtung wird von einem Luftkompressor aus der Umgebung Umgebungsluft angesaugt und verdichtet Die Temperatur der angesaugten Luft wird durch die Verdichtungswärme erhöht.

Die erzeugte Druckluft wird vom Luftkompressor teilsweise durch eine Kühleinrichtung geführt, dort auf eine Temperatur knapp oberhalb der Temperatur im Inneren des Lager- oder Transportbehälters abgekühlt und einem Mischpunkt zugeführt. Ein weiterer Teilstrom der Druckluft wird einem Mischpunkt direkt zugeführt, wo beide Teilströme eine Mischung eingehen und eine Mischtemperatur bilden. Auf diese Art kann jede beliebige Temperatur zwischen der Innentemperatur des Lager- oder Transportbehälter und der höchstmöglichen Betriebstemperatur der nachfolgenden Bauteile gebildet werden.

Vom Mischpunkt wird die Druckluft der Aufbereitung einem Wasserabscheider und einem Luftfilter zugeführt. Mögliches freies Wasser, beispielsweise aus der in der Kühleinrichtung herabgesetzten Drucklufttemperatur und der daraus resultierenden geminderten Tragfähigkeit der Druckluft, wird im Wasserabscheider abgeschieden. Mögliche in der Druckluft vorhandenen Aerosole werden von Luftfilter ausgefiltert. Beim Verlassen des Wasserabscheiders hat die Druckluft optimalerweise eine relative Feuchtigkeit von maximal 100%, d.h. freie Wasserteilchen sind nicht mehr vorhanden.

Die nach dem Wasserabscheider kondenswasserfreie Druckluft verliert ggf, nach dem Verlassen des Abscheiders Temperatur und setzt somit erneut Wasserteilchen frei. Bei Einsatz eines Wärmetauschers wird die Temperatur der Druckluft vor dem Eintritt in die Gasmembran durch die erste Stufe der Kühleinrichtung wieder angehoben, so dass die Luft eine Feuchtigkeit von weniger als 100% hat. Zur weiteren Abtrennung von zwischenzeitlich wiedergebildeten freiem Wasser ist vor der Gastrennmembran ein Wasserfänger angeordnet. Der Wasserfänger erlaubt es, weitere freie Wasserteilchen abzuscheiden, um die der Gastrennmembran zugeleitete Druckluft weiter zu trocknen. In der Anlaufphase wird die Druckluft vollständig einer Gastrennmembran zugeleitet. Mit der Gastrennung in der Gastrennmembran in Stickstoff und Sauerstoff und der überwiegenden Abscheidung des Sauerstoffs in die Umgebung wird auch der in der Druckluft noch enthaltene Wasserdampf abgetrennt und in die Umgebung abgeführt. Von der Gastrennmembran wird der erzeugte Stickstoff zu einem Stickstoffregelventil erfindungsgemäß einem Kaskadenventil geführt. Je nach Ansteuerung wird ein mehr oder weniger großer Stickstoffstrom mit einem entsprechenden Anteil an Restsauerstoff erzeugt. Der Stickstoffstrom wird dann dem Lager- oder Transportbehälter zugeführt.

Nach Absenken der Lager- oder Transporttemperatür im Inneren des Behälters und den erfolgten Stickstoffaufbau wird es erforderlich, der Behälteratmosphäre Feuchtigkeit zuzugeben, um die gewünschte Luftfeuchtigkeit im Behälter aufrecht zu erhalten. Die Anlaufphase ist dann abgeschlossen und das Verfahren kann im stationären Betrieb geführt werden. Bei mangelnder Zugabe von Feuchtigkeit wird die Frucht im Inneren des Behälters verstärkt Wasser abgeben, um die von ihr "bevorzugte" Feuchtigkeit in der umgebenden Atmosphäre zu erzeugen.

Die aus dem Stand der Technik bekannten Verfahren arbeiten mit der Verdrängung der Atmosphäre in die Umgebung. Die verdrängte Atmosphäre hat im Regelfall eine relative Luftfeuchtigkeit von 85 - 95%. Somit wird ständig Feuchtigkeit in die Umgebung abgegeben. Diese Feuchtigkeit geht dem Prozess verloren

Im Gegensatz dazu geht beim erfindungsgemäßen Verfahren keinerlei Feuchtigkeit verloren. Im stationären Betrieb wird dem Luftkompressor daher vorzugsweise die verdrängte Atmosphäre aus dem Lager- oder Transportbehälter einschließlich des von der Kühleinrichtung auskondensierten Wassers zugeführt. Zum Ausgleich für die von der Gastrennmembran abgeführte Luft wird Umgebungsluft angesaugt und verdichtet. Je nach Feuchtigkeitsgehalt der verdrängten Atmosphäre und der angesaugten Umgebungsluft enthält die verdichtete Druckluft Wasser, das je nach Drucktufttemperatur äls Wasserdampf gebunden oder als Kondensat (freies Wasser) von der Druckluft mitgeführt wird.

Bei dem erfindungsgemäßen Verfahren wird im stationären Zustand nur ein Teilstrom der Druckluft direkt der Gastrennmembran zugeleitet, während ein weiterer Teilstrom über eine Befeuchtungsmembran geleitet wird. In der Befeuchtungsmembran wird die Druckluft entfeuchtet und der Wasserdampf In den Stickstoffstrom, der aus der Gastrennmembran kommt, transferiert. Die entfeuchtete Druckluft wird nach der Befeuchtungsmembran in die Umgebung abgeleitet.

In der Anlaufphase wird die Befeuchtungsmembran nicht von Druckluft durchströmt, so dass der trockene Stickstoff nicht befeuchtet wird. In der stationären Phase wird die Befeuchtungsmembran wie beschrieben von Druckluft durchströmt, so dass in den trockenen Stickstoff Feuchtigkeit transferiert wird. Durch Vergleich des Wassergehalts der Behälteratmosphäre mit dem Wassergehalt des Stickstoffstroms wird die Temperatur der Druckluft so eingestellt, dass der Wassergehalt der Druckluft der erforderlichen Transferleistung in den Stickstoff entspricht Damit kann die über den Stickstoff zugeführte Wassermenge auf die durch Verdrängung von Behälteratmosphäre abgeführte Wassermenge abgestimmt werden. Die Aufnahmefähigkeit des entspannten Stickstoffes, in den die Feuchtigkeit transferiert wird, ist immer höher als die Aufnahmefähigkeit der Druckluft. Mit steigender Temperatur der Druckluft steigt die Aufnahmefähigkeit und beträgt beispielsweise bei 20°C 17,15 g/m³, bei 40°C 50,67 g/m³ und bei 60°C 129,02 g/m³,

Der in den Lager- oder Transportbehälter eingeführte Stickstoff erhöht den Innendruck des Behälters bis zum Ansprechen einer Druckhalteeinnchtung. Nach Ansprechen der Druckhatteeinrichtung strömt verdrängte Behälteratmosphäre in die Ansaugeinrichtung und von dort wieder in den Kompressor. Der im Behälter gegenüber der Umgebung erhöhte Luftdruck erschwert das Eindringen von Sauerstoff aus der umgebenden Atmosphäre. Dadurch hält sich auch bei abgeschaltetem Luftkompressor das einmal aufgebaute Stickstoffniveau über einen längeren Zeitraum.

Die von der überströmenden Behälteratmosphäre mitgeführte Feuchtigkeit wird ebenso wie das von der Kühlanlage erzeugte Kondenswasser über die Ansaugeinrichtung und den Luftkompressor in die erzeugte Druckluft Übernommen und bei einer Übersättigung der Druckluft im Wasserabscheider abgeführt.

Das erfindungsgemäße Verfahren erfolgt im Kreislauf, wobei die aus dem Lager- oder Transportbehälter durch Einleitung des Stickstoffstroms verdrängte Behälteratmosphäre wieder dem Prozess zugeführt wird und nur die aus der Gastrennmembran in die Umgebung abgeführte Luft durch aus der Umgebung angesaugte Luft ersetzt wird. Hierdurch kann die in der verdrängten Behälteratmosphäre enthaltene Feuchtigkeit erneut für die Befeuchtung genutzt werden und auch das von der Kühlanlage aus der Behälteratmosphäre auskondensierte Wasser wieder dem Verfahren zugeleitet werden.

Die nun zu verdichtende Luft hat einen geringfügig erhöhten Anteil an Stickstoff, was sich aber in der Aufbauzeit der Stickstoffatmosphäre nur geringfügig auswirkt. Die in der Behälteratmosphäre vorhandenen Anteile von Kohlendioxid oder Ethylen stören bei dem erfindungsgemäßen Verfahren nicht. Die Gastrennmembran trennt diese Gase ab und führt sie nach außen in die Umgebungsluft. Die in der verdrängten Behälteratmosphäre enthaltene Feuchtigkeit wird durch den geSchlossenen Kreislauf über den Kompressor wieder dem Prozess zugeführt. Da auch das von der Kühleinrichtung abgeführte Kondenswasser der Ansaugung des Kompressors zugeführt wird, kann auch diese Feuchtigkeit wieder in den Prozess eingebracht werden. Als Folge kann im Gegensatz zu herkömmlichen Anlagen, auch bei extremsten Umgebungbedingungen, die Feuchtigkeit im Behälter aufrechterhatten und ein Austrocknen der Früchte verhindert werden. Mit der hohen, kontrollierten Befeuchtungsleisturig des erfindungsgemäßen Verfahrens kann eine hohe Luftfeuchtigkeit in der Behälteratmorphäre aufrechterhalteri werden und somit der Gewichtsverlust auf 0,5-1% reduziert werden.

Über die jeweilige Einstellung des Stickstoffstromes wird während des Zeitraumes des Stickstoffäufbaus im Lager- oder Transportbehälter durch geeignete Anpassung der Mengenströme die Aufbauzeit erheblich verkürzt. Erfindungsgemäß wird für die Einstellung des Stickstoffstroms ein Kaskadenventil eingesetzt. Die ansonsten eingesetzten Proportionalventile sind technisch aufwendig und daher wartungsintensiv. Um einen stabilen Betrieb zu gewährleisten, werden bei Proportionalventilen erhebliche Anforderungen an die Steuerungssoftware gestellt. Demgegenüber sind Kaskadenventile im Aufbau einfacher, robust und im Gegensatz zu einem Proportionalventil nahezu völlig servicefrei. Das Kaskadenventil hat eine geringe Baugröße und ist deutlich kostengünstiger als ein Proportionalventil. Ober die Regeleinrichtung kann der erforderliche Stickstoffstrom erzeugt und der geforderte Stickstoffgehalt der Atmosphäre eingestellt und aufrechterhalten werden.

Mit Hilfe der erfindungsgemäßen Vorrichtung und dem erfindungsgemäßen Verfahren ist es möglich, in einem Lager oder Transportbehälter eine stickstoffreiche Atmosphäre mit einem Restsauerstoffgehatt von ca. 2% bis 4% aufzubauen. Dabei wird eine relative Luftfeuchtigkeit von ca. 85-95% aufrechterhalten.

Die erfindungsgemäß eingesetzten Gastrennrnembranen bedürfen keiner entfeuchteten/trockenen Druckluft, die zugeleitete Druckluft muss, lediglich frei von ungebundenem/freien Wasser sein. Ihre Trennfähigkeit beschränkt sich nicht nur auf die Abtrennung von Sauerstoff, sondern darüber hinaus werden alle in der zugeführten Druckluft enthaltenen Gase wie Kohlendioxid, Kohlenmonoxid, Ethylen und Edelgase abgetrennt und abgeführt. Ebenso wird der in der Druckluft enthaltene Wasserdampf nahezu vollständig abgetrennt und abgeführt, so dass der entstehende Stickstoffstrom fast absolut trocken ist.

Die erfindungsgemäß eingesetzten Befeuchtungsmembranen entziehen der druckluft auf der Sekundärseite den vorhandenen Wasserdampf und fügen ihn primärseitig dem von der Gastrennmembran erzeugten Stickstoff zu. Die Leistung der Wasserdampfübertragung hängt neben anderen Parametern von der Temperatur der Druckluft ab, die die Aufnahmefähigkeit für Wasserdampf (Feuchtigkeit) bestimmt. Um eine große Menge an Feuchtigkeit aufzunehmen und zu transferieren ist eine hohe Temperatur der Druckluft erforderlich. Die Transferleistung der verwendeten Befeuchtungsmembranen betragen ca. 85% bei trockenem Stickstoff.

Bei dem erfindungsgemäßen Verfahren ist es entgegen herkömmlicher Verfahren auch möglich, das Kondenswasser der Kühleinrichtung zu nutzen. Mögliche Keime werden durch die Verdichtungstemperatur im Inneren des Kompressors abgetötet, möglicher Schmutz wird in den dem Kompressor nachgeschalten Filtern aus der Druckluft entfernt. Weiterhin wird das Wasser in Form von Wasserdampf durch die Membranwände in den Stickstoff transferiert und ist daher "chemisch rein".

Die hohe Drucklufttemperatur von vorzugsweise 50°C bis 60°C erhöht die Leistung der Gastrennmembran. Ein größerer Stickstoffstrom bei gleichbleibendern Restsauerstoff oder ein gleichbleibender Stickstoffstrom bei Verringertem Restsauerstoff ist die Folge. Damit kann grundsätzlich die Geschwindigkeit des Stickstoffaufbaus im Transportbehälter erhöht werden, mit der Folge, dass die Frucht schneller in das "künstliche Koma" fällt, was wiederum ein verbessertes Transportergebnis nach sich zieht.

### Anlaufphase (Typ II)

Wenn eingelagerte Früchte in ihrer Schale viel Fägchtigkeit enthalten, z.B. Ananas, die direkt nach einem Regenschauer geerntet und verpackt wurden, bildet sich trotz der Kondensathildung durch die Kühleinrichtung und der Verdrängung von feuchter Behälteratmosphäre über einen längeren Lager- oder Transportzeitraum freies Wasser im Behälter und verdampft in die Behälteratmosphäre. Die relative Luftfeuchtigkeit im Behälter wird daher nicht unter 100% sinken. Um die Güter vor Fäulnis und die Kartonaden vor Durchfeuchtung zu schützen, muss der Lager- oder Transportbehälter in diesem Fall entfeuchtet werden.

Das erfindungsgemäße Verfahren wird dann nach Durchlauf der Anlaufphase Typ **I** in die Anlaufphase Typ II umgeschaltet. Bei dieser Verfahrensweise wird die gesamte vom Luftkompressor angesaugte Luft dem Lager- oder Transportbehälter entnommen und vom Luftkompressor verdichtet. Auch die bei dieser Luftfeuchtigkeit sehr große Menge auskondensierten Wassers aus der Kühleinrichtung wird dem Kompressor zugeführt. Die Temperatur der angesaugten Luft wird durch die Verdichtungswärme erhöht, die angesaugte Feuchtigkeit aus dem Lager- oder Transportbehälter wird als Wasserdampf von der Druckluft aufgenommen und als freies Wasser mitgeführt.

Die erzeugte Druckluft wird vollständig durch, die Kühleinrichtung, auf eine Temperatur knapp oberhalb der Temperatur im Inneren des Lager- oder Transportbehälter herabgekühlt. Die abgekühlte Druckluft wird zum Wasserabscheider und anschließend zum Luftfilter weitergeleitet. Durch die starke Abkühlung der Druckluft ist die Fähigkeit zur Wasser-dampfaufnahme entsprechend stark reduziert, es bildet sich sehr viel freies Wasser, das im Wasserabscheider zusammen mit dem bereits vorhandenem freien Wasser abgeführt wird.

Die nun kondenswasserfreie Druckluft wird über ein Entspannungsventil direkt wieder dem Lager- oder Transportbehälter zugeleitet. Die dem Behälter wieder zugeführte Druckluft hat gegenüber der entnommenen Atmosphäre mehr als 80% der ursprünglich enthaltenen Feuchtigkeit verloren. Im Lager- oder Transportbehälter ersetzt die zugeführte Atmosphäre die durch den Kompressor abgesaugte Behälteratmosphäre. Der Prozess wird in einem geschlossene Kreislauf geführt.

Um die konditionierte Atmosphäre in ihrem Stickstoffgehalt nicht zu gefährdet, wird Anlaufphase Typ II vorzugsweise nur zyklisch gefahren. Nach jedem Zyklus Anlaufphase II wird die Behälteratmosphäre in ihrem Feuchtigkeit- und Sauerstoffgehalt überprüft und dann im normalen stationären Betrieb geführt. Erst wenn sich über einen längeren Zeitraum eine relative Luftfeuchtigkeit von 100% hält, wird ein weiterer Zyklus Anlaufphase IIl zur Entfeuchtung der Behälterluft ausgelöst.

Bei früheren Verfahren ist davon ausgegangen worden, dass mit der Zuführung von trockenem Stickstoff und der damit verbundenen Verdrängung von Atmosphäre aus dem Transportbehälter eine ausreichende Entfeuchtung stattfindet. Beobachtungen von entsprechenden Transporten haben aber gezeigt, dass es nicht möglich ist, bei größeren Mengen von freiem Wasser, die Atmosphäre im Transportbehälter während der Transportzeit durch Einbringen von trockenem Stickstoff zu trocknen und eine Luftfeuchtigkeit von weniger als 100% einzustellen.

Mit der erfindungsgemäßen Vorrichtung ist die Möglichkeit einer effektiven Entfeuchtung gegeben. Es kann nicht nur die verdrängte Atmosphäre dem Kompressor zugeführt werden, sondern es ist möglich, die gesamte Ansaugluft für den Kompressor aus dem Behälter zu entnehmen. Unter diesen Bedingungen entsteht in der Druckluft ein großer Anteil von freiem Wasser, das über die vorhandene Abscheideeinrichtung abgeführt wird.

Sobald der Transport bzw. die Lagerung beendet sind und der Behälter geöffnet und entladen wird, ist es erforderlich, die konditionierte Atmosphäre auf normale Umweltbedingungen abzubauen. Eine Stickstoffatmosphäre mit weniger als 15% Sauerstoff, insbesondere die in einer konditionierten Atmosphäre üblichen Restsauerstoffwerte von 2-4% bilden eine tödliche Gefahr für die am Umgang mit diesen Lager- oder Transportbehältem beteiligten Menschen. Durch Entnahme der gesamten Ansaugluft aus der Umgebung, der unter Umgehung der Gastrenn- und Befeuchtungsmembranen direkten Rückführung in den Behälter und der Abführung der verdrängten Atmosphäre in die Umgebung wird das Stickstoffniveau bei der erfindungsgemäßen Vorrichtung in kürzester Zeit gesenkt und eine Gefahr für das Entladungspersonal vermieden.

In der Abschaltphase wird vom Luftkompressor ausschließlich Luft aus der Umgehung angesaugt und verdichtet. Die verdrängte behälteratmosphäre wird vollständig in die Umgebung abgeleitet Die abgekühlte Druckluft wird zum Wasserabscheider und anschließend zum Luftfilter weitergeleitet. Die nun gereinigte Druckluft wird über ein Entspannungsventil entspannt und dann wieder dem Lager- oder Transportbehälter zugeleitet. Im Lager- oder Transportbehälter verdrängt die eingeführte Umgebungsluft die Behäfteratmosphäre und leitet diese in die Umgebung. Diese Atmosphäre vermischt sich in kürzester Zeit mit der freien Umgebungsluft und stellt keinerlei Gefahr dar. Nach Erreichen eines Restsauerstoffwertes von 15% und mehr schaltet die Anlage ab, der Behälter kann gefahrlos geöffnet werden.

Die Erfindung soll anhand der Figuren näher erläutert werden, ohne die Erfindung auf diese Ausführungsformen zu beschränken. Es zeigt Figur 1 eine Prinzipdarstellung der erfindungsgemäßen Vorrichtung bzw. einer Vorrichtung zur Durchführung des erfindungsgemaßen Verfahrens. Figur 2 zeigt eine beispielhafte Ausführungsform eines in der Vorrichtung angeordneten Wärmetauschers im Längsschnitt. Figur 3a zeigt einen Längsschnitt durch einen Wasserfänger und Figur 3b einen Querschnitt. Figur 4a+b zeigt je einen Schnitt durch verschiedene Kaskadenventite. In Figur 5 ist eine Ausführungsform des Ölkühlers als Plattenwärmetauscher gezeigt.

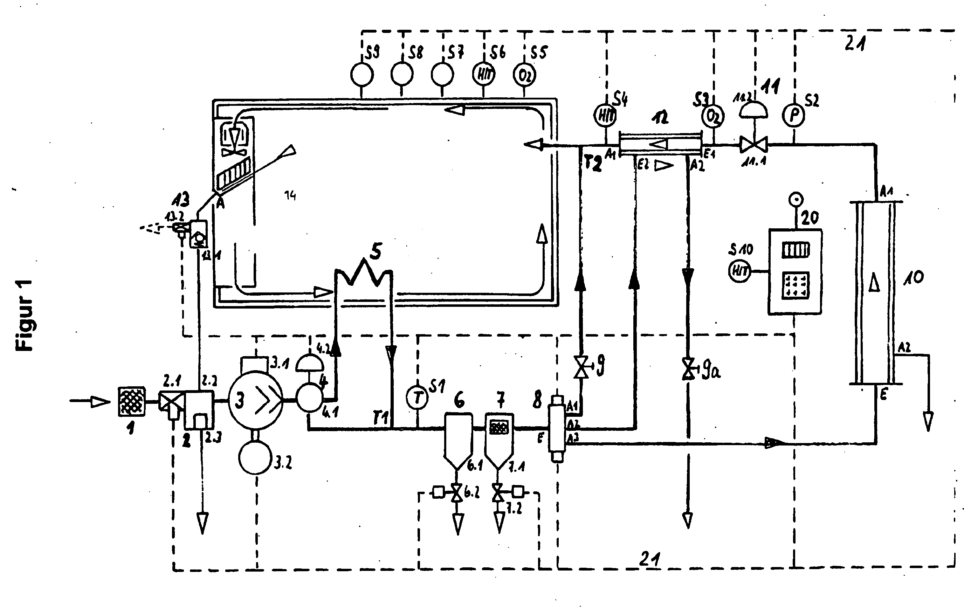

Wie in Figur 1 zu erkennen, wird über einen Ansaugfilter (1) mittels einer Ansaugeinrichtung (2) Umgebungsluft angesaugt. Der Einsatz des Ansaugfilters (1) schützt die nachgeschaltete Ansaugeinrichtung vor in der Umgebungsluft enthaltenen Schmutz. Es wird bei Bedarf beheizt, um bei niedrigen Umgebungstemperaturen eine Vereisung zu verhindern.

Der Einsatz einer dem Ansaugfilter (1) nachgeschalteten Ansaugeinrichtung (2) ermöglicht dem nachgeschalteten Luftkompressor (3) die Ansaugung von Umgebungsluft, verdrängter Behälteratmosphäre und die Zumischung des von der Kühlanlage aus der Behälteratmosphäre auskondensierten und abgeführten Wassers in den Ansaugstrom der aus der Umgebung gewonnenen Luft. Angesammeltes Wasser, das sich aufgrund der zu hohen Luftfeuchtigkeit der Umgebungsluft nicht der angesaugten Luft zumischen lässt, wird in die Umgebung abgeführt. Zur Entfeuchtung der Behälteratmosphäre kann die gesamte Ansaugluft des Kompressors aus dem Behälter entnommen werden.

Das Ansaugventil (2.1) ist in der Grundstellung geöffnet und wird für die Betriebssituation "Entfeuchtung" geschlossen. Weiterhin verfügt die Ansaugeinrichtung (2) über einen Rückluftanschluss (2.2), über den die aus dem Behälter verdrängte Atmosphäre wieder dem Luftkompressor zugeführt wird. Auch das Kondenswasser der Kühlmaschine wird über den Rückluftanschluss (2.2) in den Ansaugluftstrom gelenkt und den Kompressor zugeführt. Die Ansaugeinrichtung (2) verfügt weiterhin über ein selbsttätiges Entwässerungsventil (2.3), das bei sehr großem Anfall von Kondenswasser zu Beginn des Kühlprozesses selbsttätig öffnet und die Ansaugeinrichtung (2) entwässert. Bei reinem Kühlbetrieb (ohne gleichzeitigen Betrieb der Konditionierungsanlage) führt das Entwässerungsventil (2.3) das anfallende Kondenswasser in die Umgebung ab.

Der der Ansaugeinrichtung (2) nachgeschaltete Luftkompressor (3) erzeugt die für den Prozess benötigte Druckluft und führt sie dem nachgeschalteten Mischventil (4) zu. Die Temperatur der erzeugten Druckluft wird dabei durch die Kompressionswärme erheblich erhöht. Der Luftkompressor (3) kann über eine Kontrolleinrichtung (3.1) verfügen, mittels derer die Betriebszustände des Kompressors (3) gesteuert und überwacht werden. Der Luftkompressor (3) ist mit einem Antriebsaggregat (3.2) verbunden, das vorzugsweise elektrisch beaufschlagt wird.

Ein dem Luftkompressor nachgeschaltetes Mischventil (4) führt die erzeugte Druckluft in Teilströmen direkt, oder über eine Kühleinrichtung (5) im inneren des Lager- oder Transportbehälters dem nachgeschalteten Mischpunkt (T1) zu. Es weist einem Ventilkörper (4.1) und einen Stellantrieb (4.2) auf. Die warme Druckluft wird dem Eingang (E) des Mischventils zugeführt und als Teilstrom über den Ausgang (A1) der Kühleinrichtung (5) zugeführt. Ein weiterer Teilstrom wird ungekühlt über den Ausgang (A2) des Mischventils geführt. Die Teilströme vereinigen sich am Punkt (T1) der Druckluftleitungen und bilden dort eine Mischtemperatur, deren Wert von der dem Punkt (T1) hachgeschalteten Temperaturmessung (S1) erfasst wird. Durch die jeweilige Ansteuerung des Mischventils (4) wird eine entsprechende Aufteilung der Teilströme erzeugt und somit am Punkt (T1) eine Mischtemperatur erzeugt.

Die Tellströme werden vorzugsweise so eingestellt, dass sich am Punkt (T1) eine Temperatur der Druckluft einstellt, die einerseits die für den Feuchtigkeitstransfer erforderliche Aufnahme von Wasserdampf ermöglicht, andererseits aber die Temperaturbeständigkeit der nachfolgenden Bauteile berücksichtigt. Je nach Betriebssituation und Temperatur der Druckluft am Ausgang des Luftkompressors (3) kann jeder der beiden Teilströme 0% bis 100% betragen.

Dem einen Ausgang des Mischventils (4) ist die Kühleinrichtung (5) nachgeschaltet. Sie ist im Inneren des Lager- oder Transportbehälters angeordnet. Die gekühlte Druckluft wird dem Mischpunkt (T1) zugeführt. Dem zweiten Ausgang des Mischventils (4) ist der Mischpunkt (T1) mit der Temperaturmessung (S1) nachgeschaltet. Die ungekühlte Druckluft wird zum Mischpunkt (T1) geführt und dort mit der von der Kühleinrichtung (5) kommenden gekühlten Druckluft gemischt. Die Mischtemperatur der Druckluft wird von der Temperaturmessung (S1) erfasst.

Vom Mischpunkt (T1) aus durchströmt die Druckluft einen Wasserabscheider (6), am dem die auskondensierten (freien) Wasseranteilen abgetrennt werden. Der Wasserabscheider (6) weist ein Abscheidergehäuse (6.1) und eine Abführeinrichtung auf. Das abgeschiedene Wasser wird im unteren Bereich des Gehäuses (6.1) gesammelt und in geeigneter Weise in die Umgebung abgeführt.

Vom Wasserabscheider (6) kommend wird die entwässerte Druckluft in einer Filtereinrichtung (7) auf die erforderliche Reinheit gefiltert und dem 3-Wegeventil (8) zugeführt. Die Filtereinrichtung (7) weist ein Abscheidergehäuse (7.1) und eine Abführeinrichtung auf. Das während der Filterung auskondensierte Wasser wird im unteren Bereich des Gehäuses (7.1) gesammelt und in geeigneter Weise in die Umgebung abgeführt. Die Filtereinrichtung (7) kann auch über mehrere Filter verfügen, die entweder in getrennten oder in einem gemeinsamen Gehäuse untergebracht sind. Auch ein gemeinsames Gehäuse von Wasserabscheider (6) und Filtereinrichtung (7) ist möglich.

Die die Filtereinrichtung (7) verlassende Druckluft wird einem 3-Wegeventil (8) zugeführt. Je nach Betriebssituation strömt die Druckluft durch Ausgang (A1), (A2) oder (A3). In der Betriebsweise "Befeuchtung" wird die Druckluft vom Ausgang (A2) des 3-Wege-ventils der Befeuchtungsmembran (12) zugeführt und stellt für den von der Gastrennmembran (10) produzierten Stickstoff die benötigte Feuchtigkeit zur Verfügung, bevor die nun entfeuchtete Druckluft am Trimmventil (9a) entspannt und in die Umgebung abgeführt wird. Gleichzeitig wird Druckluft vom Ausgang (A3) der Gastrennmembran (10) zugeführt. In der Anlaufphase Typ II wird vom Ausgang (A1) über das Trimmventil (9) eine Verbindung zum Lager- oder Transportbehälter hergestellt, um dem Behälter die ihm entzogene Behälteratmosphäre nach der Entfeuchtung am Wasserabscheider (6) wiederzuzuführen. In der Anlaufphase Typ I wird die Druckluft vom Ausgang (A3) des 3-Wege-Ventils über den Punkt (T2) der Gastrennmembran (10) direkt zugeführt, ohne dass ein Teilstrom die Befeuchtungsmembran (12) durchströmt und mit Feuchtigkeit versorgt.

Die den Ausgang (A3) des 3-Wegeventils verlassende Druckluft wird der Gastrennmembran (10) zugeführt. Beim Durchströmen der Gastrennmembran (10) wird von der zugeführten Druckluft ein sauerstoffreiches Gasgemisch und andere in der Druckluft enthaltene Gase wie Wasserdampf, Kohlendioxid oder Ethylen vollständig abgetrennt und über den Ausgang (A2) in die Umgebung abgeführt. Der verbleibende kleinere und stickstoffreiche Gastrom wird über den Ausgang (A1) der Gastrennmembran (10) abgeführt und über die Druckmessung (S2) dem nachgeschalteten Stickstoffventif (11) zugeführt. Die Abtrennung des Sauerstoffs erfolgt in Abhängigkeit vom dem durch das Stickstoffregelventil (11) eingestellten Systemdruck. Das Ventil besteht aus dem Ventilkörper (11.1) und dem Stellantrieb (11.2). Als Führungsgröße zur Einstellung des Systemdruckes dient die dem Stickstoffregelventil (11) nachgeschaltete Sauerstoffmessung (S3). Alternativ kann auch die Druckmessung (S2) als Führungsgröße für das Stickstoffregelventil (11) dienen.

Vom Stickstoffregelventil (11) wird der Stickstoffstrom der Befeuchtungsmembran (12) zugeführt und wird nach Durchströmens des Membranenkörpers dem Lager- oder Transportbehälter (14) zugeführt, vermischt sich dort mit der Behälteratmosphäre und setzt den Anteil an Stickstoff herauf, bzw. den Anteil an Sauerstoff herab. Wird die Befeuchtungmembran (12) sekundärseitig vom 3-Wegeventil (8) aus von Druckluft durchströmt, wird die in der Druckluft enthaltene Feuchtigkeit in den Stickstoffstrom transferiert, mit der Folge, das dem Lager- oder Transportbehälter (14) ein "feuchter" Stickstoffstrom zugeführt wird. Der Wassergehalt des Stickstoffstroms wird an einer Feuchtigkeit-/ Temperaturmessung (S4) erfasst. Durch Vergleich mit der Feuchtigkeitsmessung des Lager- oder Transportbehälters (S6) und der Auswertung der Vergleichswerte wird die erforderliche Drucklufttemperatur und damit das erforderliche Feuchtigkeitsangebot eingestellt, sodass dem Lager- oder Transportbehälter die gewünschte Menge Feuchtigkeit zugeführt wird.

Die Behälteratmosphäre wird durch eine Sauerstoffmessung (S5) und eine Feuchtigkeits/Temperaturmessung (S6) überwacht. Die Druckhalteeinrichtung (13) umfasst ein Druckhalteventil (13.1) und ein Entspannungsventil (13.2). Bei Erreichen des erforderlichen Innendruck des Lager- oder. Transportbehälters (14) öffnet das Druckhalteventil (13) und führt die überströmende Behälteratmosphäre dem Rückluftanschluss (2.2) der Ansaugeinrichtung (2) einschließlich des Gehalts an Wasserdampf wieder dem Prozess zu. Das Entspannungsventil wird zum Abbau der Stickstoffatmosphäre des Behälters geöffnet, um verdrängte Atmosphäre in die Umgebung abzuführen.

Mittels einer Steuereinrichtung (20) werden die Betriebsparameter eingegeben und die Betriebszustände angezeigt. Sie enthält Test-und Betriebprogramme und zeichnet alle Anlagenzustände auf. Mittels der Steuereinrichtung (20) werden die Sensoren ausgewertet und die Aktoren betätigt.

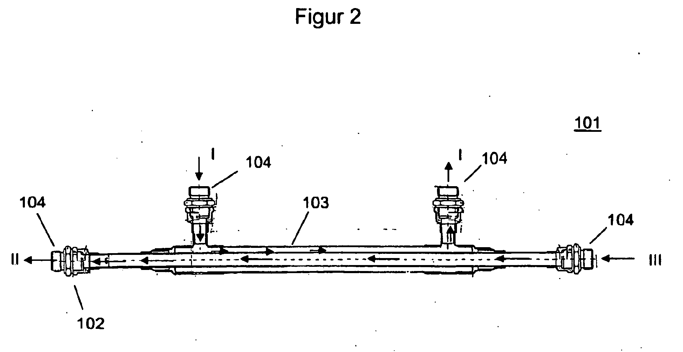

Figur 2 zeigt einen Wärmetauscher, wie er zur Erwärmung der Druckluft vor dem Eintritt in die Gastrennmembran (10) eingesetzt werden kann. Der Wärmetauscher (101) ist aus einem Doppelrohr aufgebaut. Das innere Rohr (102) wird von Druckluft durchströmt, die nach Verlassen der Druckluftaufbereitung (4, 5, 6, 7) der Gastrennmembran (10) zugeführt wird (Druckluft III). Das äußere Rohr (103) wird von Druckluft durchströmt, die aus dem Luftkompressor (3) kommend der Kühleinrichtung (5) zugeführt wird (Druckluft I). Da die Temperatur der Druckluft 1 erheblich höher ist, als die Temperatur der Druckluft III, überträgt sich ein Teil der Energie von Druckluft I auf die Druckluft III, so dass die Temperatur der Druckluft I sinkt und die Temperatur der Druckluft III steigt. Durch den Anstieg der Temperatur der Druckluft III verdampfen die freien Wasserteilchen zumindest teilweise und der Feuchtigkeitsgehalt der Luft kann so eingestellt werden. Optimalerweise wird bei idealem Betrieb des Wärmetauscher eine relative Feuchtigkeit von 80-85% in der Druckluft über Temperaturerhöhung eingestellt. Der Wärmetauscher wird über die Anschlussverschraubungen (104) an den entsprechenden Rohr- oder Schlauchleitungen bzw. Blauteilen der erfindungsgemäßen Vorrichtung befestigt. In einer weiteren, nicht dargestellten-Ausführungsform ist der Wärmetauscher (101) so ausgelegt, dass die Druckluft I Energie nicht nur an die Druckluft III abgibt, sondern unter teilweisem oder vollständigen Verzicht auf eine Isolierung des äußeren Rohrs (103) die Energie auch an die Umluft der Container-Kühlanlage abgegeben wird. Die Energieabgabe an die Umluft lässt sich durch eine Vergrößerung der Oberfläche beispielsweise durch den Einsatz eines Rippenrohres noch verstärken. Diese Ausführungsform des Wärmetauscher führt zu einer Vorkühlung der Druckluft I, so dass der Luftkühler der Kühleinrichtung kleiner ausgeführt werden kann. Vorzugsweise ist der Wärmetauscher zwischen dem 3-Wegeventil (8) und der Gastrennmembran (10) angeordnet, wobei der Ausgang der Druckluft III möglichst nahe am Eingang der Gastrennmembran anzuordnen ist. Hierdurch lässt sich der Temperaturverlust nach Durchströmen des Wärmetauschers reduzieren.

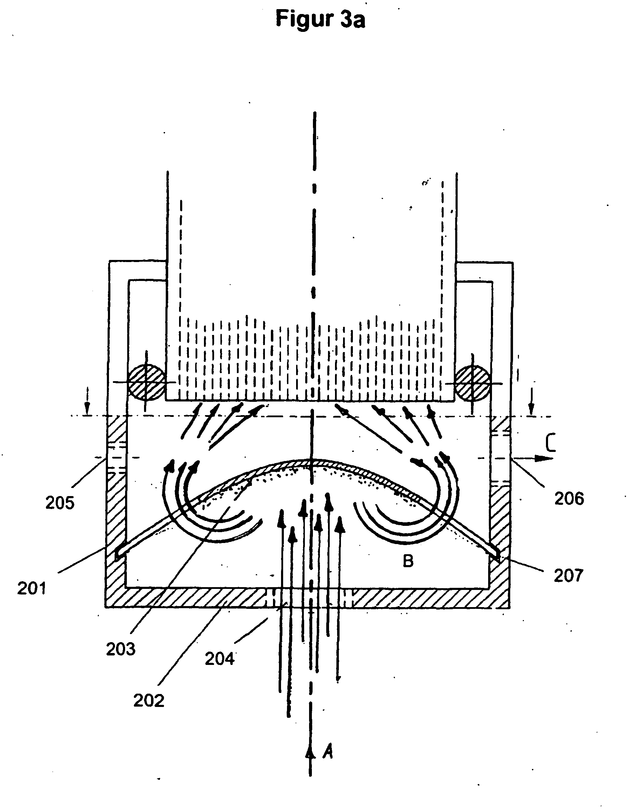

Figur 3a zeigt einen Querschnitt des Bauteils, in dem die Gastrennmembran (10) angeordnet ist. In dieser Ausführungsform ist vor der Gastrennmembran (10) ein Wasserfänger (201) angeordnet. Der Wasserfänger ist aus zwei Teilen aufgebaut, einem Funktionsboden (202) und einem Prallblech (203). Der Funktionsboden hat mittig eine Gewindebohrung (204), über die der Gastrennmembran (10) die Druckluft A zugeführt wird. Weiterhin sind im Funktionsboden Gewindebohrungen zur Aufnahme von Sensoren, wie Drucksensoren oder Temperatursensoren, angeordnet. In der Seitenwand des Funktionsbodens findet sich eine weitere Gewindebohrung (206), über die Druckluft der Befeuchtungsmembran (12) zugeführt wird. Der Funktionsboden ist vorzugsweise aus Aluminium hergestellt und ggf. an Stelle des üblichen Eingang des Flansches an einer handelsüblichen Gastrennmembran montiert.

Innen im Funktionsboden befindet sich eine Einrichtung zur Befestigung des Prallblechs (203). In der gezeigten Ausführung ist der Funktionsboden (202) innen mit einer umlaufenden Nut (207) versehen, in die das Prallblech (203) eingesetzt wird. Das Prallblech hat eine geringe Übergröße, so dass es sich ausschließlich über die Biegespannung in seiner Position hält. Es ist dazu so geformt, dass es eine Kalotte bildet, deren höchster Punkt nahe dem Mittelpunkt des Membranbündels liegt. Das Prallblech ist vorzugsweise aus beschichtetem Edelstahl hergestellt. Durch die Wirkung der Beschichtung bilden sich große Wassertropfen, die am Prallblech herablaufen und vom Blechrand herabtropfen. Die Druckluft A wird durch die Gewindebohrung (204) in den Funktionsboden (202) geführt. Wenn die Druckluft zu Beginn des Prozesses freie Wasserteilchen mit sich führt, strömt sie gegen das Prallblech und wird umgelenkt B. Bei der Umlenkung B wird die Strömungsgeschwindigkeit der Druckluft so weit reduziert, dass freie Wasserteilchen nicht mehr vollständig mitgerissen werden. Diese Teilchen setzen sich am Prallblech ab und rinnen aufgrund der Kalottenform an die Außenkante des Bleches. Von dort tropfen sie auf den Funktionsboden.

Die Strömung der Druckluft geht nach der Umlenkung am Prallblech von der Mitte der Kalotte zum Außenrand des Funktionsbodens B. Die Strömungsgeschwindigkeit wird hier weiter verringert, so dass das abgeschiedene Wasser nicht wieder aufgenommen wird, sondern weitere Wasserteilchen ausgefällt werden.

Nachdem die erfindungsgemäße Vorrichtung ihre Betriebstemperatur aufgenommen hat, stellt sich bei der Gastrennmembran (10) zugeführten Druckluft B eine relative Luftfeuchte von ca. 80% ein. Zu diesem Zeitpunkt wird die Befeuchtungsmembran (12) freigegeben, so dass Druckluft (C) über die Gewindebohrung (206) zur Befeuchtungsmembran (12) strömt. Die nun trockene Druckluft, die durch die Gewindebohrung (204) eintritt, ist in der Lage, Wasser vom Funktionsboden (202) aufzunehmen. Im Prozessverlauf wird vorteilhafterweise sämtliches abgelagertes Wasser verdampft und von der Druckluft aufgenommen.

Die Ausführungsform mit Einsatz eines Wasserfängers hat den Vorteil, dass die Gastrennmembran zuverlässig vor freien Wasserteilen geschützt ist und hierdurch die Funktion der Gastrennmembran, ihre Leistungsfähigkeit und ihre Lebensdauer gesichert und aufrecht erhalten wird.

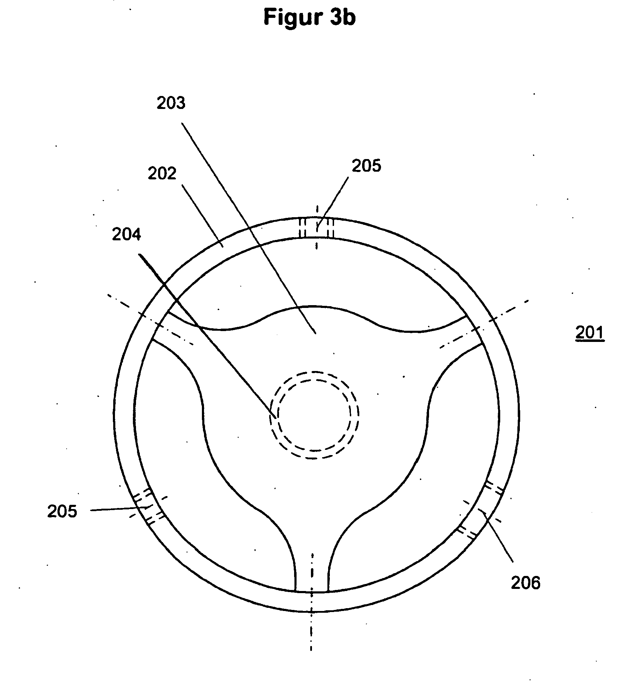

Figur 3b zeigt einen Querschnitt durch den Wasserfänger (201). In dem kreisförmigen Funktionsboden (202) ist ein im Wesentlichen kreisförmiges Prallblech (203) angeordnet, das über drei im Dreieck angeordnete Verstrebungen mit dem Funktionsboden verbunden ist. Die Gewindebohrung (205, 206) sind jeweils um 120° versetzt auf der Kreisebene des Funktionsbodens (202) angeordnet. Das Prallblech (203) ist zentrisch über der Gewindebohrung (204) des Funktionsbodens (202) angeordnet, durch den die zu entwässernde Druckluft eintritt.

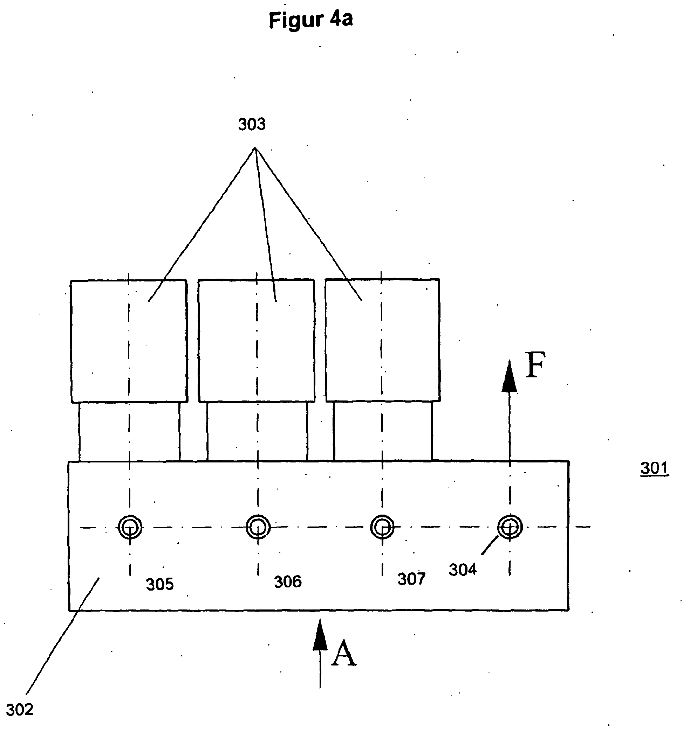

Figur 4a zeigt eine Ausführungsform des Kaskadenventils (301), das als Stickstoffventil (11) eingesetzt wird. Das Kaskadenventil ist aufgebaut aus einem Ventilkörper (302) mit einem internen Bohrungssystem und vier internen Trimmvorrichtungen. Auf den Ventilkörper sind drei Flanschventile (303) montiert, die vorzugsweise elektrisch angesteuert werden.

Der Ventilkörper (302) des Kaskadenventils enthält die Stickstoffzuführung A, die Aufteilung des Stickstoffstromes zu den Zuführungen der einzelnen Flanschventile und der Einstelleinrichtung (304). Er enthält weiterhin die Stickstoffzuführungen zu den jeweiligen dem Flanschventilen nachgeschalteten Einstelleinrichtungen (305, 306, 307), sowie die Stickstoffzuleitungen zum Stickstoffsammler, die den Einstelleinrichtungen nachgeschaltet sind. Der Stickstoffsammler ist mit dem Stickstoffausgang F verbunden.

Die internen Leitungen sind vorzugsweise als Bohrungen ausgeführt, die mit den Anschlusskanälen zu den Flanschventilen und den Trimmvorrichtungen so abgestimmt sind, dass keine Turbulenzen in den internen Leitungen entstehen.

Der Ventilkörper (302) wird mit seinem Anschlüss A direkt mit dem Ausgang der Gastrennmembran verbunden. Durch die entsprechende Einstellung der Einstelleinrichtung (304) wird der Basisstickstoffstrom eingestellt, der den untersten Wert hinsichtlich des Restsauerstoffgehaltes bildet. Die Einstelleinrichtungen (305, 306, 307) werden bei jeweils betätigten Flanschventilen so eingestellt, dass sich im Stickstoffstrom jeweils ein höherer Sauerstoffgehalt ergibt. So kann nicht nur durch das Zuschalten des jeweiligen Ventils des Stickstoffstromes in seinem Sauerstoffgehalt erhöht werden, sondern durch Kombination der Ventile sind weitere Erhöhungen des Restsauerstoffes/Stickstoffstrom möglich. Der jeweils erzeugte Stickstoffstrom wird insgesamt über den Ausgang F dem Behälter zugeführt.

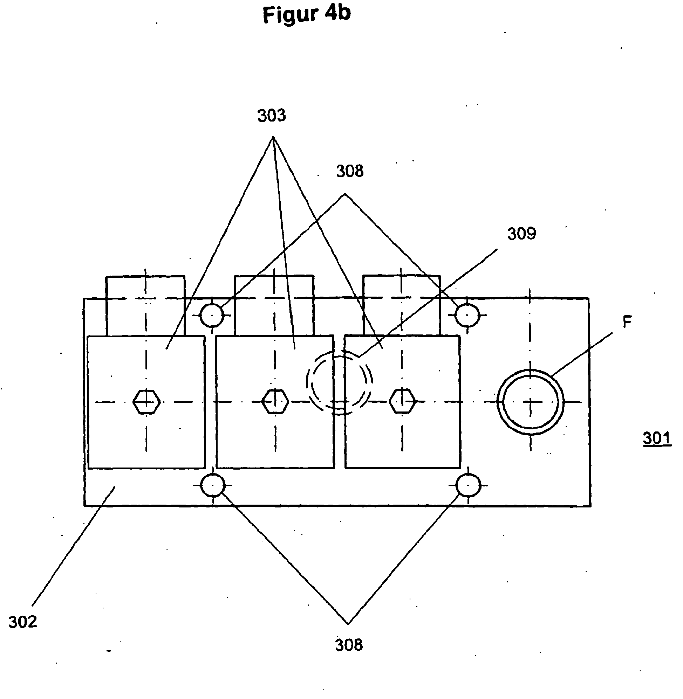

Figur 4b zeigt eine weitere Ausführungsform des Kaskadenventils (201). Mittels der Verbinder (308) ist der Ventilkörper (302) direkt mit der Gasfrennmembran (10) (nicht abgebildet) verbunden. Die Verbindung zur Austrittsöffnung der Gastrennmembran (10) wird durch den O-Ring (309) abgedichtet. Bei dieser Ausführungsform ist der Einfluss von Schwingungen und Stößen auf die Verbindung minimiert. Hierdurch ist eine größere Sicherheit für die dauerhafte Qualität der Druckbelasteten Verbindung des Kaskadenventils mit der Gastrennmembran sichergestellt.

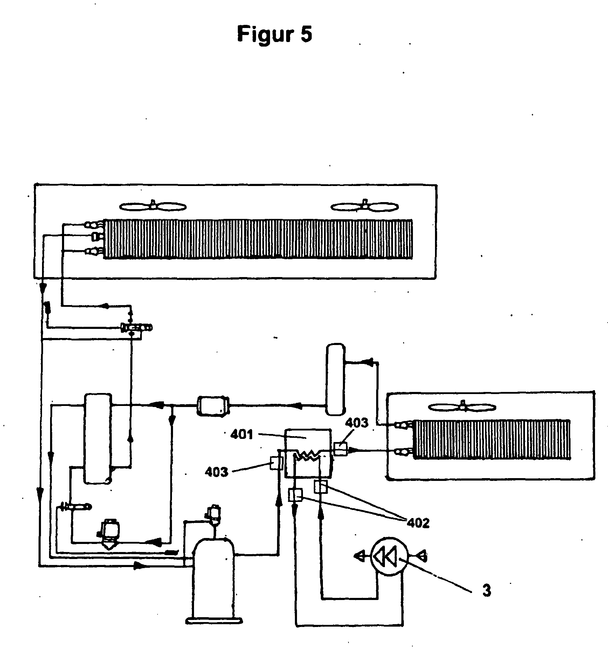

Figur 5 zeigt eine mögliche Ausführungsform des Ölkühlers als Öl-Kühlmittel-Wärmetauscher in Form eines Plattenwärmetauschers (401). Die Eingangsseite (402) des Plattenwärmetauschers (401) ist direkt mit den Ölausgangs- und Öleingangsanschlüssen des Kompressors (3) verbunden. Das Kompressoröl strömt mit einem vom Luftkompressor (3) erzeugten Druck vom Luftkompressor durch den Plattenwärmetauscher (401) und zurück zum Kompressor. Die Ausgangsseite (403) des Plattenwärmetauschers (401) ist mit dem Kühlkreislauf der Kühlanlage verbunden. Bei Betrieb der erfindungsgemäßen Vorrichtung wird die innentemperatur des Behälters bei +8 bis +10°C gehalten, daher steht eine ausreichende Kühlleistung zur Verfügung, um die Energie aus dem Kompressoröl aufzunehmen und **über** den Kondensator der Kühleinrichtung (5) wieder abzuführen.

### Bezugszeichenliste

- 1: Ansaugfilter
- 2: Ansaugeinrichtung
- 3: Luftkompressor
- 4: Mischventil
- 5: Kühleinrichtung
- 6: Wasserabscheider
- 7: Filtereinrichtung
- 8: 3-Wegeventil
- 9: Trimmventil
- 9a: Trimmventil zur Entspannung
- 10: Gastrennmembran
- 11: Stickstoffventil
- 12: Befeuchtungsmembran
- 13: Druckhatteeinrichtung
- 14: Lager- oder Transportbehälter

- S1: Temperaturmessung ,
- S2: Druckmessung
- S3: Sauerstoffmessung
- S4: Temperatur-/ Feuchtigkeitmessung
- S6: Sauerstoffmessung
- S6: Temperatur-/ Feuchtigkeitmessung
- S10: Temperatur-/ Feuchtigkeitmessung

- 20: Steuerung
- 21: Steuer und Sensorleitungen

- 101: Wärmetauscher
- 102: inneres Rohr
- 103: äußeres Rohr
- 104: Anschlussverschraubung
- 201: Wasserfänger
- 202: Funktionsboden
- 203: Prallblech
- 204: Gewindebohrung
- 205: Gewindebohrung
- 206: Gewindebohrung
- 207: Nut
- 301: Kaskadenventil
- 302: Ventilkörper
- 303: Flanschventile
- 304: Einstellvorrichtung
- 305: Einstellvorrichtung
- 306: Einstellvorrichtung
- 307: Einstellvorrichtung
- 308: Verbinder
- 309: O-Ring

- 401: Plattenwärmetauscher
- 402: Eingangsseite
- 403: Ausgangsseite

## Patentansprüche

1. Vorrichtung zur Herstellung einer konditionierten Atmosphäre in einem Lager oder Transportbehälter (14) mit einem Kompressor (3) zur Erzeugung von Druckluft, einer Kühleinrichtung (5) zur Abkühlung der Druckluft, einer dem Kompressor und der Kühleinrichtung nachgeschalteten Gastrennmembran (10) zur Erzeugung eines stickstoffreichen Gasstroms, wobei der aus der Gastrennmembran austretende Gasstrom dem Lager- oder Transportbehälter (14) zugeleitet wird, um im Behälter eine stickstoffreiche, konditionierte Atmosphäre zu erhalten, wobei die Vorrichtung eine Befeuchtungsmembran (12) aufweist, die hinter der Gastrennmembran (10) angeordnet ist und der aus der Gastrennmembran (10) austretende Stickstoffstrom durch die Befeuchtungsmembran (12) geleitet und mit Feuchtigkeit beladen wird, **dadurch gekennzeichnet, dass** der Gastrennmembran (10) ein Stickstoffregelventil (11) nachgeschaltet ist, wobei das Stickstoffregelventil ein Kaskadenventil ist und in der Vorrichtung vor der Gastrennmembran (10) ein Wasserfänger (201) angeordnet ist, der aus einem Funktionsboden und einem Prallblech aufgebaut ist, wobei der Funktionsboden (202) einen kreisförmigen Querschnitt hat und anstelle eines Eingangsflansches an der Gastrennmembran montiert ist.

2. Vorrichtung gemäß Anspruch 1, **dadurch gekennzeichnet, dass** die Kühleinrichtung (5) vollständig im Lager- oder Transportbehälter (14) angeordnet ist.

3. Vorrichtung gemäß Anspruch 2, **dadurch gekennzeichnet, dass** die Kühlung in der Kühleinrichtung (5) über den Wärmeaustausch mit dem Kühlluftstrom und der Kühlanlage erfolgt.

4. Vorrichtung gemäß einem der vorhergehenden Ansprüche, **dadurch gekennzeichnet, dass** der Gastrennmembran (10) ein Mehrwegventil (8) zur Teilung des Druckluftstroms vorgeschaltet ist

5. Vorrichtung gemäß Anspruch 4, **dadurch gekennzeichnet, dass** das Mehrwegventil (8) die Druckluft in zwei Teilströme teils, von denen einer der Gastrennmembran (10) und der zweite gleichzeitig der Befeuchtungsmembran (12) zugeleitet wird.

6. Vorrichtung gemäß einem der vorhergehenden Ansprüche, **dadurch gekennzeichnet, dass** die Befeuchtungsmembran (12) zusätzlich zum Stickstoffstrom sekundärseitig von Druckluft, die vom Kompressor (3) erzeugt wird, durchströmt wird und der Druckluft in der Befeuchtungsmembran (12) die Feuchtigkeit entzogen und in den Stickstoffstrom weitergeleitet wird.

7. Vorrichtung gemäß einem der vorhergehenden Ansprüche, **dadurch gekennzeichnet, dass** zwischen Kühleinrichtung (5) und Gastrennmembran (10) ein Wasserabscheider (6) zur Abscheidung des Kondenswassers und/oder ein Luftfilter (7) zur Reinigung der Druckluft, vorzugsweise ein Wasserabscheider mit nachgeschaltetem Luftfilter, angeordnet ist.

8. Vorrichtung gemäß einem der vorhergehenden Ansprüche, **dadurch** gekennzelchnet, dass am Ausgang des Behälters (14) ein Druckhalteventil (13) angeordnet ist, das über eine Ansaugeinrichtung (2) mit dem Kompressor (3) verbunden ist, wobei die Ansaugeinrichtung (2) so geschaltet werden kann, dass dem Kompressor zur Erzeugung der Druckluft im wesentlichen aus dem Druckhalteventil (13) austretende Behälteratmosphäre zugeführt wird.

9. Vorrichtung gemäß einem der vorhergehenden Ansprüche, **dadurch gekennzeichnet, dass** zwischen Kompressor (3) und Kühleinrichtung (5) ein Mischventil (4) angeordnet ist, das die aus dem Kompressor ausströmende Druckluft in zwei Teilströme teilt, wobei ein Teilstrom durch die Kühleinrichtung (5) geführt wird und anschließend an einem Mischpunkt (T1) mit dem zweiten Teilstrom zur Einstellung einer definierten Temperatur wieder zusammengeführt wird.

10. Vorrichtung gemäß einem der vorhergehenden Ansprüche, **dadurch gekennzeichnet, dass** zwischen Mehrwegventil (8) und Lager- oder Transportbehälter (14) ein Entspannungsventil (9) angeordnet ist.

11. Verfahren zur Herstellung einer konditionierten Atmosphäre in einem Lager- oder Transportbehälter, bei dem mittels eines Kompressors (3) Druckluft erzeugt wird, wahlweise aus der Umgebungsluft oder der Behälteratmosphäre, die Druckluft anschließend mit einer Kühleinrichtung (5) gekühlt wird und aus der Druckluft ein stickstoffreicher Gasstrom zur Leitung in den Lager- oder Transportbehälter (14) mittels einer Gastrennmembran (10) erzeugt wird, wobei vorzugsweise vor der Einleitung in den Lager- oder Transportbehälter der Stickstoffstrom befeuchtet wird,
**dadurch gekennzeichnet, dass**
die überströmende Behälteratmosphäre im Kreislauf geführt wird und nach ihrem Austritt aus dem Lager- oder Transportbehälter (14) wieder dem Druckluftkompressor (3) zugeführt wird, wobei der Gastrennmembran (10) ein Stickstoffregelventil (11) nachgeschaltet ist und dieses Stickstoffregelventil ein Kaskadenventil ist.

12. Verfahren gemäß Anspruch 11, **dadurch gekennzeichnet, dass** mittels einer Beifeuchtungsmembran (12) ein definierter Feuchtigkeitsgehalt des Stickstoffstroms eingestellt wird.

13. Verfahren gemäß einem der Ansprüche 11 oder 12, **dadurch gekennzeichnet, dass** die Feuchtigkeit zur Beladung der Befeuchtungsmembran (12) aus der Druckluft gewonnen wird.

14. Verfahren gemäß einem der Ansprüche 11 bis 13, **dadurch gekennzeichnet, dass** die Befeuchtungsmembran (12) der Gastrennmembran (10) nachgeschaltet ist.

15. Verfahren gemäß einem der Ansprüche 11 bis 14, **dadurch gekennzeichnet, dass** die Kühleinrichtung (5) im Inneren des Lager- oder Transportbehälters angeordnet ist.

16. Vorrichtung gemäß einem der Ansprüche 1 bis 10, **dadurch gekennzeichnet, dass** vor der Gastrennmembran (10) ein Wärmetauscher (101) angeordnet ist, der vorzugsweise aus einem inneren Rohr und einem diesen umgebenden äußeren Rohr aufgebaut ist.

17. Vorrichtung gemäß einem der Ansprüche 1 bis 10 oder 16, **dadurch gekennzeichnet, dass** das Kaskadenventil direkt mit der Austrittsöffnung der Gastrennmembran verbunden ist.

18. Vorrichtung gemäß Anspruch 17, **dadurch gekennzeichnet, dass** das Kaskadenventil einen Ventilkörper mit internem Bohrungssystem und internen Trimmvorrichtungen und drei Flanschventile aufweist.

19. Vorrichtung gemäß einem der Ansprüche 1 bis 10 oder 16 bis 18, **dadurch gekennzeichnet, dass** der Kompressor (3) mit einem Ölkühler verbunden ist und der Ölkühler ein Öl-Kühlmittel-Wärmetauscher, insbesondere ein Plattenwärmetauscher ist.

## Claims

1. Device for producing an air conditioned atmosphere in a storage or transport container (14) with a compressor (3) for creation of compressed air, a cooling device (5) for cooling down the compressed air, a gas separation membrane (10) connected downstream from the compressor and the cooling device to produce a gas flow rich in nitrogen, wherein the gas flow emerging from the gas separation membrane is taken to the transport container (14) in order to maintain a nitrogen-rich, air conditioned atmosphere in the container, **characterized in that** the device has a moistening membrane (12), which is arranged behind the gas separation membrane (10), and the nitrogen flow emerging from the gas separation membrane (10) is led through the moistening membrane (12) and laden with moisture by the moistening membrane (12), **characterized in that** a nitrogen regulating valve (11) is connected downstream from the gas separation membrane (10), wherein the nitrogen regulating valve (11) is a cascade valve and in the device, a watertrap (201) is arranged upstream from the gas separation membrane (10), being composed of a functional bottom and a bottle, and whereat the functional bottom (202) has a circular cross section and is mounted on the gas separation membrane in place of an inlet flange.

2. Device per claim 1, **characterized in that** the cooling device (5) is arranged entirely in the storage or transport container (14).

3. Device per claim 2, **characterized in that** the cooling in the cooling device (5) occurs by heat exchange with the current of cool air and the cooling system.

4. Device per one of the preceding claims, **characterized in that** the gas separating membrane (10) has a multiway valve (8) upstream from it to separate the flow of compressed air.

5. Device per claim 4, **characterized in that** the multiway valve (8) divides the compressed air into two partial streams, one of which is taken to the gas separation membrane (10) and the other to the moistening membrane (12) at the same time.

6. Device per one of the preceding claims, **characterized in that** compressed air produced by the compressor (3) flows through the moistening membrane (12) in addition to the nitrogen flow at the secondary side and the humidity is removed from the compressed air in the moistening membrane (12) and passed on to the nitrogen flow.

7. Device per one of the preceding claims, **characterized in that** there is arranged a water separator (6) between cooling device (5) and gas separation membrane (10) for removal of the water of condensation, and/or an air filter (7) ) for cleaning the compressed air, preferably a water separator with air filter downstream from the water separator.

8. Device per one of the preceding claims, **characterized in that** at the outlet of the container (14) there is arranged a pressure maintaining valve (13), which is connected via an intake device (2) to the compressor (3), while the intake device (2) can be switched so that basically the container atmosphere emerging from the pressure maintaining valve (13) is taken to the compressor for production of the compressed air.

9. Device per one of the preceding claims, **characterized in that** there is arranged between compressor (3) and cooling device (5) a mixing valve (4), which divides the compressed air flowing from the compressor into two partial streams, one partial stream is taken through the cooling device (5) and then at a mixing point (T1) it is again combined with the second partial stream to adjust a defined temperature.

10. Device per one of the preceding claims, **characterized in that** an expansion valve (9) is arranged between the multiway valve (8) and the storage or transport container (14).

11. Method for producing an air conditioned atmosphere in a storage or transport container, wherein compressed air is produced by means of a compressor (3), optionally from the surrounding air or the container's air, the compressed air is then cooled with a cooling device (5) and a nitrogen-rich gas flow is produced from the compressed air for conduction to the transport container (14) by means of a gas separation membrane (10), wherein the nitrogen flow is preferably moistened before being introduced into the storage or transport container, **characterized in that** the overflowing container atmosphere is led in a circuit and after emerging from the transport container (14) it is again taken to the air compressor (3), wherein a nitrogen regulating valve (11) is connected downstream from the gas separation membrane (10) and this nitrogen regulating valve is a cascade valve.

12. Method per claim 11, **characterized in that** a defined moisture content of the nitrogen flow is adjusted by means of a moistening membrane (12)

13. Method per one of claims 11 or 12, **characterized in that** the moisture for loading onto the moistening membrane (12) is obtained from the compressed air

14. Method per one of claims 11 to 13, **characterized in that** the moistening membrane (12) follows the gas separation membrane (10).

15. Method per one of claims 11 to 14, **characterized in that** the cooling device (5) is arranged inside the storage or transport container.

16. Device per one of claims 1 to 10, **characterized in that** a heat exchanger (101) is arranged upstream from the gas separation membrane (10), preferably being composed of an inner tube and a this inner tube surrounding outer tube.

17. Device per one of claims 1 to 10 or 16, **characterized in that** the cascade valve is connected directly to the outlet opening of the gas separation membrane.

18. Device per claim 17, **characterized in that** the cascade valve has a valve body with internal bore system and internal trim devices and three flange valves

19. Device per one of claims 1 to 10 or 16 to 18, **characterized in that** the oil cooler is an oil/refrigerant heat exchanger, especially a plate heat exchanger.

## Revendications

1. Dispositif pour créer une atmosphère conditionnée dans un conteneur de stockage ou de transport (14), comprenant un compresseur (3) pour produire de l'air comprimé, un dispositif de refroidissement (5) pour refroidir l'air comprimé, et une membrane de séparation de gaz (10), placée en aval du compresseur et du dispositif de refroidissement et destinée à générer un flux de gaz riche en azote, le flux de gaz qui sort de la membrane de séparation de gaz étant acheminé au conteneur de stockage ou de transport (14), afin de créer une atmosphère conditionnée, riche en azote, dans le réservoir, le dispositif présentant une membrane d'humidification (12) qui est placée en aval de la membrane de séparation de gaz (10), et le flux d'azote qui sort de la membrane de séparation de gaz (10) étant guidé à travers la membrane d'humidification (12) et étant chargé d'humidité, **caractérisé par le fait qu'**une vanne de régulation d'azote (11) est placée en aval de la membrane de séparation de gaz (10), la vanne de régulation d'azote étant une vanne de cascade et le dispositif comportant, en amont de la membrane de séparation de gaz (10), un élément de retenue d'eau (201) qui se compose d'un fond fonctionnel et d'une tôle de chicane, le fond fonctionnel (202) présentant une section transversale circulaire et étant monté sur la membrane de séparation de gaz, à la place d'une bride d'entrée.

2. Dispositif selon la revendication 1, **caractérisé par le fait que** le dispositif de refroidissement (5) est installé complètement dans le conteneur de stockage ou de transport (14).

3. Dispositif selon la revendication 2, **caractérisé par le fait que** le refroidissement dans le dispositif de refroidissement (5) s'effectue par l'échange de chaleur avec le flux d'air de refroidissement et l'installation de refroidissement.

4. Dispositif selon une des revendications précédentes, **caractérisé par le fait qu'**en amont de la membrane de séparation de gaz (10), il est prévu une vanne à plusieurs voies (8) destinée à diviser le flux d'air comprimé.

5. Dispositif selon la revendication 4, **caractérisé par le fait que** la vanne à plusieurs voies (8) divise l'air comprimé en deux flux partiels dont l'un est acheminé à la membrane de séparation de gaz (10) et le deuxième est dirigé en même temps vers la membrane d'humidification (12).

6. Dispositif selon une des revendications précédentes, **caractérisé par le fait que** la membrane d'humidification (12) est traversée, en plus du flux d'azote, sur le côté secondaire par de l'air comprimé produit par le compresseur (3), et l'humidité est extraite de l'air comprimé dans la membrane d'humidification (12) et est transférée dans le flux d'azote.

7. Dispositif selon une des revendications précédentes, **caractérisé par le fait qu'**il est prévu, entre le dispositif de refroidissement (5) et la membrane de séparation de gaz (10), un séparateur d'eau (6) pour séparer l'eau de condensation et/ou un filtre à air (7) pour nettoyer l'air comprimé, et de préférence, il s'agit d'un séparateur d'eau avec un filtre à air en aval.

8. Dispositif selon une des revendications précédentes, **caractérisé par le fait qu'**à la sortie du conteneur (14), il est prévu un clapet de maintien de pression (13) qui est relié au compresseur (3) par l'intermédiaire d'un dispositif d'aspiration (2), lequel peut être commandé de manière à ce que le compresseur, pour produire l'air comprimé, soit alimenté essentiellement par l'atmosphère du conteneur qui sort du clapet de maintien de pression (13).

9. Dispositif selon une des revendications précédentes, **caractérisé par le fait qu'**il est prévu, entre le compresseur (3) et le dispositif de refroidissement (5), une vanne mélangeuse (4) qui divise l'air comprimé sortant du compresseur en deux flux partiels, un des flux partiels étant guidé à travers le dispositif de refroidissement (5) et étant ensuite réuni en un point mélangeur (T1) avec le deuxième flux partiel, en vue de régler une température définie.

10. Dispositif selon une des revendications précédentes, **caractérisé par le fait qu'**une soupape de décompression (9) est placée entre la vanne à plusieurs voies (8) et le conteneur de stockage ou de transport (14).

11. Procédé pour créer une atmosphère conditionnée dans un conteneur de stockage ou de transport, selon lequel de l'air comprimé est produit par un compresseur (3), au choix à partir de l'air ambiant ou de l'atmosphère du conteneur, l'air comprimé est ensuite refroidi par un dispositif de refroidissement (5), et un flux de gaz riche en azote est produit à partir de l'air comprimé, au moyen d'une membrane de séparation de gaz (10), en vue d'être introduit dans le conteneur de stockage ou de transport (14), le flux d'azote étant humidifié de préférence avant d'entrer dans le conteneur de stockage ou de transport, **caractérisé par le fait que** le trop plein de l'atmosphère du conteneur est mis en circulation et, après sa sortie du conteneur de stockage ou de transport (14), est ramené au compresseur d'air comprimé (3), une vanne de régulation d'azote (11) étant placée en aval de la membrane de séparation de gaz (10) et cette vanne étant une vanne de cascade.

12. Procédé selon la revendication 11, **caractérisé par le fait qu'**une teneur en humidité définie du flux d'azote est réglée à l'aide d'une membrane d'humidification (12).

13. Procédé selon une des revendications 11 ou 12, **caractérisé par le fait que** l'humidité pour charger la membrane d'humidification (12) est obtenue à partir de l'air comprimé.

14. Procédé selon une des revendications 11 à 13, **caractérisé par le fait que** la membrane d'humidification (12) est placée en aval de la membrane de séparation de gaz (10).

15. Procédé selon une des revendications 11 à 14, **caractérisé par le fait que** le dispositif de refroidissement (5) est installé à l'intérieur du conteneur de stockage ou de transport.

16. Procédé selon une des revendications 1 à 10, **caractérisé par le fait qu'**en amont de la membrane de séparation de gaz (10), il est prévu un échangeur de chaleur (101) qui est de préférence constitué d'un tube interne et d'un tube externe entourant celui-ci.

17. Procédé selon une des revendications 1 à 10 ou 16, **caractérisé par le fait que** la vanne de cascade est reliée directement à l'orifice de sortie de la membrane de séparation de gaz.

18. Procédé selon la revendication 17, **caractérisé par le fait que** la vanne de cascade présente un corps de vanne, avec un système d'alésages internes et des dispositifs de compensation internes, et trois soupapes à brides.

19. Procédé selon une des revendications 1 à 10 ou 16 à 18, **caractérisé par le fait que** le compresseur (3) est relié à un refroidisseur d'huile et le refroidisseur d'huile est un échangeur de chaleur huile - agent réfrigérant, en particulier un échangeur de chaleur à plaques.
